# EUROPEAN PATENT SPECIFICATION

(11) **EP 0 513 352 B1**
(45) Date of publication and mention of the grant of the patent: **29.09.1999**
(21) Application number: 91902784.7
(22) Date of filing: 29.01.1991
(51) Int. Cl.: C02F 1/52, C02F 1/24, C02F 9/00

(54) **METHOD OF CLEANING SOIL WATER**
METHODE ZUR REINIGUNG VON GRUNDWASSER
PROCEDE D'EPURATION DES EAUX DU SOL

(30) Priority: 29.01.1990 JP 1814090
(43) Date of publication of application: 19.11.1992
(73) Proprietor: SAKURADA, Yasuyuki, Yokohama-shi, Kanagawa 230 (JP)
(72) Inventor: SAKURADA, Yasuyuki, Yokohama-shi, Kanagawa 230 (JP)
(74) Representative: Spall, Christopher John
(86) International application number: PCT/JP91/00102
(87) International publication number: WO 91/11392

(56) References cited:
- AT-A- 394 814
- FR-A- 2 217 414
- JP-A- 50 052 849
- JP-B- 54 035 022
- JP-B- 56 047 836
- JP-B- 63 055 997
- US-A- 3 419 493
- US-A- 3 725 265

## Description

### Technical Field

This invention relates to a method for highly purifying contaminated rivers, lakes, swamps, bay seawater, domestic sewage, industrial waste fluid, butcher waste fluid, sewage, dust waste fluid, garbage incinerator waste fluid, dung, agricultural chemicals, germicides, kitchen sewage and the like.

### Background Technology

Conventional sewage purification apparatus use concrete reservoirs in large areas of land or spacious buildings, and apparatus to culture aerobic bacteria are provided in the reservoir water to supplement it continuously with bacteria. Simultaneously, air is sent by a pump into the water for activation of the bacteria. Contaminated water, diluted several-fold, is contacted with bacteria so that contaminants in the water are digested by bacteria and the water is purified. However, it takes several months and needs large equipment and, high costs. It also needs a lot of land and apparatus for complete purification. Because of this, contaminated water has been drained into rivers after being diluted several-fold, resulting in polluted rivers, lakes, swamps and seas which is undesirable. A filtering apparatus using sands, activated carbon, membranes or the like, is very expensive and very uneconomical.

In the past, various kinds of single flocculants have been used to purify water by causing sludge and inorganic matters to adhere to each other and form a suspended precipitate which can be removed from contaminated water. Aluminium sulfate, ferric chloride, alum, polymer flocculants and the like have been used alone as the flocculant. When contaminated water mixed and stirred with a single flocculant and left to settle, only small stones and sands stuck together (cohered) and settled on the bottom of the container after 6 to 24 hours, therefore the water would not become transparent. In civil constructions, the process was repeated until the contaminated water became transparent. However, it was impossible to remove impurities dissolved in the water even by spending 30% of the construction costs.

Contaminated water generated in construction sites was sent by a pump into a large tank installed on the highest mountain or hill nearby, where the water was stirred with a single flocculant and left for 6 to 24 hours to separate inorganic matters by cohesion-sedimentation. The supernatant, though still translucent, was then transferred to another purification tank installed at a lower level, where a flocculant was stirred into it again and it was left for 6 to 24 hours, thereafter the supernatant was transferred to another tank installed on the hill at a lower level. This process was repeated several times.

The above process was repeated more than 6 to 10 times, and transparent water was finally drained into the river. Even now, ferric chloride, alum or the like is used in construction sites. (However, BOD (Biological Oxygen Demand) and COD (Chemical Oxygen Demand) of the contaminated water or purified water are not taken into account.) Therefore, even if the water became transparent, it was still contaminated.

Several features in using a single flocculant are as follows:
1) Flocculation and purification effects are low and slow;
2) No deodorant effect can be expected;
3) No sterilization effects can be expected;
4) No decolorant effects can be expected;
5) For the purpose of merely obtaining clear water from contaminated water, it costs about 30% of total cost of a engineering work. The process includes transferring supernatant or overflow to a lower stage vessel 5 to 10 times which is done every 6 to 24 hours and eventually clear water is obtained to flow into a river.
(6) The process is not capable of removing materials dissolved in water and thus such materials remain in clear water to flow into a river.

It is understood in academic society and in industry that contaminants in contaminated water are unable to be purified by separation and removal using any kinds of flocculants. Therefore, in water treatment plants and sewage purification plants, solid materials and inorganic matters in the sewage are first removed by slow sedimentation, filtering, or by a slow sedimentation-separation using single flocculant (ferric chloride) with which the contaminated water is mixed and stirred. Then after a slow sedimentation-separation, it is contacted with bacteria for 1 to 5 days by means of the activated-sludge process, whereby invisibly small aerobic bacteria, which are cultivated by being given air, digest it. This process calls for a lot of land, equipment, costs and time. Nevertheless, perfect purification is impossible. Therefore, contaminated water is drained into rivers after adjusting its pH and filtering it.

In dung processing, dung is contacted with bacteria for 5 to 7 days by the activated sludge process, then filtered through high polymer membranes, which cost 20 million Yen per cubic meter. This way, however, COD can only be lowered to 90 to 95 mg/liter. Thereafter, the filtrate is mixed with ferric chloride to settle contaminants in it, then let through a layer of activated carbon to make transparent water with COD of 30mg/liter before draining into the river. This is the limit but it is expensive; the cost of the purification equipment is 20 million yen per ton, while the processing costs are 2,500 to 6,000 yen per ton.

Austrian Patent No 394 814 B uses a combination of exhaust gas purification, flocculation and pH-adjustment to purify waste water.

### Disclosure of the Invention

The purpose of this invention is to provide a method which can recycle water at a low cost by efficiently purifying various types of contaminated water to give highly pure water.

The present invention provides a method for purifying sewage by treatment with flocculants, comprising mixing the flocculants with the sewage and separating purified water from contaminants, wherein the flocculants are a calcium containing compound and one or more substances selected from the group consisting of aluminium polychloride, ferric chloride, aluminium sulfate, alum, sodium hydroxide, detergent, polymeric flocculant, sodium bicarbonate, iron sulfate, ammonium sulfate, sodium aluminate, zinc chloride, aluminium chloride, potassium, aluminium sulfate, magnesium sulfate, magnesium chloride, sodium hypochlorite, sulfuric acid, nitric acid, hydrochloric acid, phosphoric acid, boric acid, chlorine dioxide, ammonia, chlorine, ozone, oxygen, sulfur, sodium carbonate, sodium silicate, surface active agent and cleanser,
wherein the treatment is repeated more than once and
wherein the flocculants are introduced from a hopper to a mixer and mixed in the mixer with one portion of sewage supplied from a purification tank, the resulting mixture is injected from a nozzle of an induction pipe through an ejector into the tank to flocculate and settle the contaminants from the sewage and to separate a purified supernatant therefrom, sewage around the nozzle in the tank is forced into the ejector, an exhaust gas is sucked through the ejector into the tank to form a number of bubbles with ultra fine particles, the flocculated and settled contaminants are taken out by a drain at the bottom of the tank, a purified supernatent is removed from the upper portion of the tank and purified air is exhausted from the top of the tank.

By repeating the process middle water, drinking water and super pure water can be obtained from contaminated water.

Higher bleaching powder consists of 30-40% of lime and 70 - 60% of chlorine.

A purification method according to another embodiment of the invention includes a first process in which at least two kinds of flocculants are introduced into contaminated water for stirring therein and mixing therewith so as to float and/or sediment inorganic and organic matters. In the following second process, at least three kinds of flocculants are introduced into supernatant or overflow obtained in the first process for stirring therein and mixing therewith so as to float and/or sediment inorganic and organic matters remaining therein.

At least one of the first or second process described above is repeated more than once. Thus, middle water, drinking water and super-pure water can be obtained.

The flocculants to be used in the first process are such as described above.

The primary composition of the flocculant used in the second process is a calcium-containing chemical added with one or more kinds of chemicals such as ferric chloride, aluminium polychloride, calcium carbonate, sodium bicarbonate, calcium hydroxide, iron sulfate, ammonium sulfate, sodium alminate, zinc chloride, aluminium chloride, potassium alum, hydrochloric acid, sulfuric acid, nitric acid, phosphoric acid, boric acid, surface active agent, cleanser, ammonia, chlorine, ozone, oxygen, stabilized chlorine dioxide, sulfur, sodium carbonate, iron chloride, sodium silicate.

Higher bleaching powder requires no disinfectants and it decomposes cyanide and also has deodorant, decolorant and purification of excrements effects. Lime has the greatest advantage among all flocculants in terms of sterilization, decomposition, purification, discoloration, deodorization.

When contaminated water is mixed and stirred with lime or bleaching powder and then ferric chloride is added thereto for stirring and mixing therewith, a multiplier effect is brought about to purify the contaminated water.

Further utilization of alum in addition to the above chemicals results in a greater purification effect in which up to 99% of the impurities in the contaminated water are removed, thus achieving sterilization, deodorization, discoloration and purification in a short time period.

More than four repetitions of the purification process of the supernatant obtained from either of the given methods of purification of contaminated water, such as human waste, animal waste, waste water from an incineration plant or a disposal treatment plant, sewage containing algae bloom, contaminated river water, factory effluent, industrial effluent or the like, will provide purified water comparable to drinking water within an hour.

Mere use of the above flocculant(s) can effect purification and deodorization of contaminated water. If, however, it is necessary to decompose oils and fats or other excrements, detergent or cleanser is mixed with contaminated water during the purification process so as to decompose such oils and fats and thereafter the purification process is repeated by use of the above flocculant(s). In this way, purification can be achieved efficiently. This process produces an amount of sludge which is less than 50% of that produced by a conventional activated sludge process. Although it has been believed that reducing water content of sludge to less than 80% is impossible, sludge from the purification process of this invention using a suitable combination of detergent, calcium containing material, ferric chloride, potassium alum, aluminium polychloride has a water content less than 67.4%, even after manual dehydration. Even lower water content can be expected when sludge is dehydrated by means of a centrifuge or a press-filter. Due to the multiplier effects of detergent and flocculant, it is possible to deodorize bad smells particular to sewage in a single stage purification, leaving the good smell of detergent. Addition of the above chemicals to sewage for mixing more than twice therewith results in a supernatant which can be used as middle water. Two additional repetitions of the purification process without using detergent provides an odorless supernatant. More than four repetitions of the purification process using disinfectant or bleaching powder provides drinking water. More than five repetitions of the purification process provide water substantially the same as super pure water. Addition of small amounts of sulfur increases clarity of the purified water and maintains the quality of the purified water. Utilization of bleaching powder at the first and last stage of the purification process increases efficiency of the process, while providing an increased deodorant effect and greatly reducing the water content of the sludge.

Purification of an exhaust gas is also possible by passing the exhaust gas into the contaminated water during purification process.

When a liquid containing sulfuric acid and nitric acid is produced by reason of decomposition of CO₍₁₋₃₎, NO₍₁₋₅₎ and SO₍₁₋₃₎, such liquid can be neutralized with sodium carbonate or sodium hydroxide and can be purified by means of the above purification agents so as to purify water and air simultaneously.

When calcium carbonate is supplied to contaminated water for stirring and mixing therewith and thereafter carbon dioxide is mixed with the contaminated water, calcium carbonate reacts with carbon dioxide to form calcium bicarbonate which tends to dissolve in water, whereby reduced amount of sludge which will be produced after purification of contaminated water. When calcium carbonate is used during introduction of exhaust gas into the purification system, calcium carbonate will react with carbon dioxide in the exhaust gas and will be dissolved in water as calcium bicarbonate.

### Brief Description of the Drawing

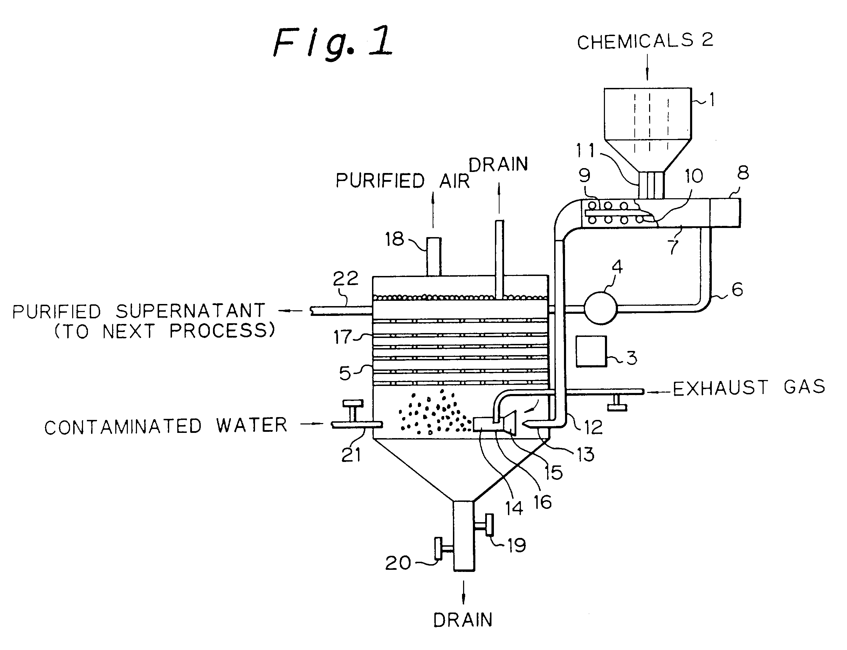

Fig. 1 is a side elevational view of an example of the device for practising the present method.

### (Best Mode for Practising the Invention)

Several embodiments of the present invention will be explained herein.

The following examples are for the purpose of explaining several embodiments of sewage purification process.

### Example (Purification of Sludge or the like)

Algae bloom, red-tide or sludge from water is stirred and mixed with flocculant so as to flocculate and float any sludge in the contaminated water for purification thereof.
(A) Sludge from Kasumigaura Lake is introduced in a glass vessel up to a level of 2cm from the bottom of the vessel. 0.2 liter of water contaminated with green colored algae bloom is poured into the above vessel. The chemicals listed below are introduced into the vessel and stirred and mixed therein. 97% or more of the sludge excrements contained in the vessel is flocculated and clear water is obtained. After having removed the floating sludge, conditioning was carried out by means of acidic and basic agents (maintaining the pH value of the liquid within 5 to 10, preferably at approximately 7, resulting in purified water which is clear).
   Note: Repetition of process (A) 5 or more times resulted in clear and odorless water having both BOD and COD values less than 2mm/liter.
   (a) ferric chloride (30% concentration) 2 drops
   (b) lime 0.25 gr.
   (c) alum 0.25 gr.
(B) The liquid with sludge removed, or purified water, from (A) is transferred to another vessel and chemicals the same as (A) or the chemicals listed below are introduced for stirring and mixing therein. Impurities remaining in the water are flocculated and sedimented within four minutes so as to purify and clarify the water.
   (a) ferric chloride (30% concentration) 2 drops
   (b) lime or bleaching powder 0.25 gr.
   (d) aluminium polychloride (30% conc.) 3 drops
(C) Purified supernatant from (B) is transferred to another vessel and the chemicals listed below are introduced therein for stirring and mixing therewith. Impurities remaining in the liquid are flocculated and sedimented so as to obtain a clear supernatant.
   (a) ferric chloride (30% conc.) 2 drops
   (b) lime 0.25 gr.
   (d) aluminium polychloride (30% conc.) 3 drops
(D) Purified supernatant from (C) is transferred to another vessel and the chemicals listed below are introduced therein for stirring and mixing therewith.
   (a) ferric chloride (30% conc.) 2 drops
   (b) bleaching powder 0.25 gr.
   (d) aluminium polychloride (30% conc.) 3 drops

   Note: There will be a possibility that only two kinds of chemicals, consisting of lime and bleaching powder or aluminium polychloride are used.
(E) Purified supernatant from (D) is transferred to another vessel and the chemicals listed below are introduced therein for stirring and mixing therewith. Then, impurities remaining in the liquid flocculate and sediment within four minutes, resulting in clear supernatant (there will be a case in which ferric chloride is not used).
   (c) alum 0.25 gr.
   (d) aluminium polychloride (50% conc.) 0.3 cc
   (f) aluminium sulfate (50% conc.) 0.3 cc
   Note: There will be a case in which (b) and (c) and one of (d) and (f), or (c) and one of (d) and (f) are used.
(F) Supernatant from (E) is transferred to another transparent glass vessel and the chemicals listed below are added thereto for stirring and mixing therewith. After predetermined settlement time, a clearer supernatant is obtained.
   (a) ferric chloride (50% conc.) 0.3 cc
   (e) bleaching powder (or lime) 0.25 gr.
   (c) alum 0.25 gr.
   (f) aluminium sulfate (50% conc.) 0.3 cc
   (d) aluminium polychloride (50% conc.) 0.3 cc
   Note: There will be a case in which (e) and one of (d) and (f) are used.
(G) Supernatant from (F) is transferred to another transparent glass vessel and the chemicals listed below are added thereto for stirring and mixing therewith. After settlement of four minutes or less, an extraordinarily clear supernatant can be obtained.
   (e) bleaching powder (or lime) 0.25 gr.
   (f) aluminium sulfate (50% conc.) 0.3 cc
   (d) aluminium polychloride (20% conc.) 0.2 cc

Any contaminated water or sewage can be purified so as to provide purified water being clear, odorless and sterile in a reduced time. Large production rates and efficiency are achieved by conducting 3 to 5 stages of purification processes which are appropriately selected from the above (A) to (G) processes, or by using chemicals selected from those used in the above processes or a combination thereof. If desired, a basic agent, acidic agent, detergent, soap, cleanser, sand, clay, mud, disinfectant or the like can be added to the liquid for stirring and mixing therewith so as to decompose sludge or oils and fats, or so as to be seeds for floc formation, or as to be a pH regulating agent or a sterilizing agent.

### Example (Purification of Sewage from Disposal Plant)

(A) 0.2 liter of sewage disposed of from Yumenoshima, Tokyo is introduced from a sample container into a clear glass vessel. The sewage is contaminated to be of a dark black, tar-like color and provide a bad smell which tends to cause one to lose all senses. The chemicals listed below are stirred and mixed with the sample. After a few minutes settlement, sludge starts to coagulate and, in ten minutes or less, the height of the layer of sludge sediment reaches a level of one-ninth of the total water depth, with the light brown supernatant forming the remaining eight-ninths of the total water depth thereabove. The bad smell is reduced by half. The supernatant is transferred to another clear glass vessel.
   (a) ferric chloride (50% conc.) 5 drops
   (b) lime (fine powder) 0.5 gr.
   (c) alum (fine powder) 0.5 gr.
(B) The chemicals listed below are stirred and mixed with the supernatant from (A). After three minutes settlement, sludge sediments form one-tenth of the total water depth, with the remaining translucent supernatant forming nine-tenths of the total water depth thereabove. No bad smell is sensed.
   (b) lime (fine powder) 0.5 gr.
   (a) ferric chloride (50% conc.) 3 drops
   (c) alum (50% conc.) 0.5 gr.
   (d) aluminium polychloride (30% conc.) 3 drops
   (f) aluminium sulfate (30% conc.) 3 drops
(C) The translucent supernatant from (B) is transferred to another clear glass vessel and the chemicals listed below are stirred and mixed therewith. After three-minute settlement, a coagulation of sludge is formed with a height of one-tenth of the total water depth, with the remaining transparent supernatant making up nine-tenths of the height of total water depth thereabove.
   (a) ferric chloride (50% conc.) 2 drops
   (e) bleaching powder (fine powder) 0.25 gr.
   (c) alum (fine powder) 0.25 gr.
   (d) aluminium polychloride (50% conc.) 3 drops
   (f) aluminium sulfate (50% conc.) 3 drops
   (g) polymeric flocculant 0.25 gr.
(D) The supernatant from (C) is transferred to a clear glass vessel and the following chemicals are stirred and mixed therewith.
   (a) ferric chloride (30% conc.) 2 drops
   (e) bleaching powder (fine powder) 0.25 gr.
   (d) aluminium polychloride (30% conc.) 3 drops
   (h) disinfectant 1 drop (stabilized chlorine dioxide)

The contaminated water before purification having both BOD and COD values of 180,000 is purified to BOD and COD values of 3-1 after 3 to 5 stages of the purification process. When, before purification, the contaminated water is mixed and stirred with calcium carbonate, sodium hydroxide, detergent, cleanser and the like or the combination thereof so as to decompose excrements and oils and fats, and then is mixed with the various chemicals above so as to form coagulation of the sludge, or is conditioned to have a pH value of between 10 and 5, preferably approximately pH 7, by means of an acidic agent or a basic agent, the contaminated water is purified at once to give brilliantly clear water. The thus obtained supernatant and tap water are contained separately, sealed in clear glass vessels of the same configuration. Such tap water becomes cloudy within 2 months. However, the supernatant still remains unchanged, i.e., clear and odorless, after 4 years or more.

### Example (Purification of Milk)

(A) Milk with a BOD value of 180,000 and a COD value of 170,000 contained in a vessel is mixed and stirred with the chemicals listed below and is then kept still. After four minutes or less a white coagulation layer is formed which is one-tenth of the total water depth, thus leaving a clear, purified supernatant layer forming nine-tenths of the total water depth.
   (i) sodium hydroxide (30% conc.) 2 drops
   (a) ferric chloride (30% conc.) 2 drops
   (b) lime (fine powder) 0.25 gr.
   (c) alum (fine powder) 0.25 gr.
(B) The supernatant from (A) is transferred to a transparent, glass vessel and is mixed and stirred with the chemicals listed below and is then kept still. After three minutes or less, a coagulation layer which is one-tenth of the total water depth is formed, leaving a clear, purified supernatant layer forming nine-tenths of the total water depth.
   (a) ferric chloride (30% conc.) 2 drops
   (b) lime (fine powder) 0.25 gr.
   (d) aluminium polychloride (30% conc.) 3 drops
   (f) aluminium sulfate (30% conc.) 3 drops
(C) The supernatant from (B) is transferred to a transparent, glass vessel and is mixed with the chemicals listed below and is then kept still. After three minutes or less, a white sediment layer is formed at the bottom of the vessel, leaving a transparent water layer above making up nine-tenths of the total water depth. The above processes are repeated 3 to 5 times or more using suitable combinations of the above chemicals. Both the BOD and the COD of the thus purified supernatant both are below 3.
   (e) bleaching powder (fine powder) 0.25 gr.
   (d) aluminium polychloride (30% conc.) 3 drops
   (f) aluminium sulfate (30% conc.) 3 drops

In the treatment of milk, a coagulant which is effective with a protein is preliminarily stirred and mixed therewith and the coagulated protein can be recovered from the liquid for suitable use.

### Example (Purification of Human Waste)

(A) 0.2 liter of human waste is stirred and mixed with 0.5 cc of sodium hydroxide solution (50% conc.) for the purpose of directly purifying and clarifying the waste and then the solid matter and sediment are removed. Then, the supernatant is transferred to a transparent glass vessel and is stirred and mixed with the chemicals listed below and is then kept still. After four minutes or less, a coagulant forms in the bottom of the vessel and is one-tenth of the height of the total water depth, leaving a translucent purified supernatant of nine-tenths of the height of the total water height thereabove. The smell is reduced to one-third.
   (a) ferric chloride (50% conc.) 0.5 cc
   (b) lime 0.5 gr.
   (c) alum 0.5 gr.
(B) The translucent supernatant from (A) is transferred to a transparent glass vessel and is stirred and mixed with the chemicals listed below and is then kept still. After three minutes, a coagulated layer, having a height of one-tenth of the total depth of the liquid is formed, leaving a transparent purified supernatant layer having a height of nine-tenths the total depth thereabove.
   (b) lime (fine powder) 0.3 gr.
   (a) ferric chloride (30% conc.) 0.2 cc
   (c) alum 0.25 gr.
   (d) aluminium polychloride (50% conc.) 3 drops
   (f) aluminium sulfate (50% conc.) 3 drops
(C) The purified supernatant from (B) is transferred to a transparent glass vessel and is stirred and mixed with the chemicals listed below. Thus, transparent purified supernatant is obtained.
   (a) ferric chloride (30% conc.) 2 drops
   (b) lime (fine powder) 0.3 gr.
   (d) aluminium polychloride (50% conc.) 3 drops
   (f) aluminium sulfate (50% conc.) 3 drops
(D) The transparent supernatant from (C) is transferred to a transparent glass vessel and is stirred and mixed with the chemicals listed below. After 3 to 5 or more repetitions of the purification process, both BOD and COD are reduced to 3-1 or less. When one drop of disinfectant is added in the last purification stage, a sterile supernatant is obtained. For several years, no change is detected in such a supernatant when it is contained in a sealed transparent vessel.
   (a) ferric chloride (30% conc.) 2 drops
   (e) bleaching powder (fine powder) 0.3 gr.
   (d) aluminium polychloride (30% conc.) 3 drops

### Example (Purification of Human Waste)

(A) All solids in a human waste sewage are removed by filtration means. 0.2 litres of the resultant filtrate is stirred and mixed with 1 cc of sodium hydroxide solution (50% conc.) and solid contained therein is removed. Then, the chemicals listed below are added thereto and rapid agitation is given to the liquid and thereafter the liquid is kept still.
   After several minutes, the impurities contained in the liquid settle to form a layer of a height of one-tenth the total depth, leaving an unclear supernatant layer of a height of nine-tenths the total depth thereabove. The smell of the supernatant is reduced by half.
   (i) detergent (50% conc.) 1 cc
   (a) ferric chloride (50% conc.) 3 drops
   (b) lime 0.5 gr.
   (c) alum 0.3 gr.
   (d) aluminium polychloride (50% conc.) 3 drops
   (k) clay as coagulation seeds, small amount
(B) The transparent supernatant from (A) is transferred to another glass vessel and is stirred and mixed with the chemicals listed below and then is kept still for several minutes. Sludge remaining in the supernatant is coagulated and settles to give a layer of a height of one-tenth the total depth, leaving a purified, translucent supernatant of a height of nine-tenths the total depth thereabove.
   (a) ferric chloride (50% conc.) 3 drops
   (1) calcium hydroxide 0.3 gr.
   (c) alum (50% conc.) 3 drops
   (d) aluminium polychloride (50% conc.) 3 drops
   (f) aluminium sulfate (30% conc.) 2 drops
(C) The transparent supernatant from (B) is transferred to a transparent glass vessel and is stirred and mixed with the chemicals listed below and then is kept still. A clear, purified supernatant is obtained.
   (a) ferric chloride (30% conc.) 2 drops
   (m) calcium carbonate (fine powder) 0.25 gr.
   (d) aluminium polychloride (30% conc.) 3 drops
   (n) carbon dioxide small amount
(D) The transparent supernatant from (C) is transferred to a transparent glass vessel. Then, the clear, purified supernatant is taken out and the purification process is repeated 3-5 times or more. By this method, such highly contaminated sewage is purified to have a COD value of 3 or less within one hour and with a large production rate. When one drop of stabilized chlorine dioxide is given in the last purification stage and the resulting purified supernatant is contained in a sealed transparent container such supernatant remains unchanged more than five years.
   (e) bleaching powder (fine powder) 0.25 gr.
   (a) ferric chloride (30% conc.) 2 drops
   (d) aluminium polychloride (30% conc.) 3 drops

### Example (Purification of Algae Bloom containing Sewage)

(A) 0.2 liter of green-coloured sewage contaminated with algae bloom, which smells fishy, is filtered to remove floating algae bloom and solids therein. The resultant filtrate is stirred and mixed with the chemicals listed below. Sludges contained in the filtrate are rapidly coagulated and separated from the remaining supernatant. Thus, the supernatant is clear and purified.
   (i) sodium hydroxide or sodium carbonate (30% conc.) 3 drops
   (j) detergent or cleanser 3 drops
      -----When a particular sewage is extremely contaminated, this agent may be added after stirring and mixing or after removing floating material.-----
   (b) lime (fine powder) 0.25 gr.
   (a) ferric chloride (30% conc.) 2 drops
   (c) alum (30% conc.) 3 drops
   (d) aluminium polychloride (30% conc.) 2 drops
(B) The transparent supernatant from (A) is transferred to another transparent vessel and is stirred and mixed with the chemicals listed below. Then, sludge contained in the supernatant is rapidly separated within four minutes or less.
   (a) ferric chloride (30% conc.) 2 drops
   (b) lime (fine powder) 0.25 gr.
   (c) alum (30% conc.) 3 drops
   (d) aluminium polychloride (30% conc.) 3 drops
(C) The transparent supernatant from (B) is transferred to a transparent vessel and is stirred and mixed with the chemicals listed below. Then, the supernatant is purified to be clearer.
   (a) ferric chloride (30% conc.) 2 drops
   (b) lime (fine powder) 0.25 gr.
   (d) aluminium polychloride (30% conc.) 3 drops
(D) The transparent supernatant from (C) is transferred to a transparent vessel and is stirred and mixed with the chemicals listed below. Then, the supernatant is purified to be clearer.
   (b) lime (fine powder) 0.25 gr.
   (d) aluminium polychloride (30% conc.) 3 drops
   (f) aluminium sulfate (30% conc.) 3 drops
(E) The transparent supernatant from (D) is transferred to another transparent vessel and is stirred and mixed with the chemicals listed below. The supernatant is further purified. Repetition of purification stage three to five times is conducted by suitably combining the above (A) to (E) processes and the chemicals used in each of the processes. Thus, the supernatant is purified so as to reduce both BOD and COD to 1-3 or less.
   (a) ferric chloride (30% conc.) 2 drops
   (b) lime or bleaching powder 0.2 gr.
   (d) aluminium polychloride (30% conc.) 2 drops

### Example (Purification of Sewage from Papermill)

(A) Sewage from a papermill is extremely contaminated, but can be purified. 0.2 liter of such sewage is rapidly stirred and mixed with the chemicals listed below. After settlement thereof for a few minutes, a sediment of sludge of a height of one-tenth of the total depth is formed, leaving thereabove a milky supernatant layer of a height of nine-tenths the total depth.
   (a) ferric chloride (30% conc.) 3 drops
   (b) lime (fine powder) 0.25 gr.
   (c) alum (fine powder) 0.25 gr.
(B) The transparent supernatant from (A) is transferred to another transparent vessel and is stirred and mixed with the chemicals listed below. Then, coagulation sedimentation begins, resulting in a layer of sludge sediment having a height of one-tenth the total depth of the liquid and a transparent supernatant layer of a height of nine-tenths of the total depth forms above the sediment.
   (a) ferric chloride (30% conc.) 2 drops
   (b) lime (fine powder) 0.25 gr.
   (c) alum (30% conc.) 3 drops
   (d) aluminium polychloride (30% conc.) 3 drops
   (f) aluminium sulfate (30% conc.) 2 drops
(C) The transparent supernatant from (B) is transferred to another transparent vessel and is stirred and mixed with the chemicals listed below. After 3 to 5 or more repetitions of the purification process, the sewage which was extremely contaminated is purified to BOD and COD values of 3-1 or less. A single drop of disinfectant is added to the resultant supernatant and it is contained in a sealed bottle. Such liquid has no inclination of rot after 4 years or more.
   (a) ferric chloride 1 drop
   (b) lime 0.2 gr.
   (d) aluminium polychloride (30% conc.) 2 drops

There will be a case in which lime and aluminium polychloride are exclusively used.

### Example (Purification of Sewage from Slaughter House)

(A) 0.2 liter of sewage (containing rot drainage) from a slaughter house is stirred and mixed with the chemicals listed below. All sludge contained in the sewage is coagulated and settled to give a layer of one-tenth the total depth within three minutes, leaving thereabove a translucent supernatant layer of a height of nine-tenths the total depth.
   (a) ferric chloride (30% conc.) 3 drops
   (b) calcium or lime (fine powder) 0.3 gr.
   (c) alum (fine powder) 0.3 gr.
(B) The supernatant from (A) is transferred to another transparent vessel and is mixed with chemicals the same as those in (A) above so as to obtain a new supernatant. The above procedure is repeated 3 to 5 times or more. Then, sludge, heavy metals, colon bacilli, fats or other toxic substances all are purified to thereby reduce both BOD and COD values to 3-1 or less. In most ideal purification systems, any solids and insolubles are removed from the sewage by filtration means. The resultant filtrate is combined with soda, soap soda, detergent, soap, cleanser, sand, clay, mud, acidic agent, basic agent, disinfectant and the like. The resultant mixture is processed using chemicals for the purpose of further purification thereof. It is also possible to mix flocculants which are effective for proteins with the liquid prior to supplying a purification agent thereto so as to recover such protein and thereafter the purification process is conducted. Proteins can also be recovered together with purification agents.

### Example (Purification of Sewage from Slaughter House)

(A) 0.2 liter of sewage from a slaughter house is stirred and mixed with the chemicals listed below. After settlement for a few minutes or less, sludge contained therein is coagulated and settles, thus resulting in a slightly transparent supernatant.
   (i) sodium hydroxide solution (30% conc.)
   (a) ferric chloride (30% solution)
   (b) calcium or lime (fine powder)
   (f) aluminium sulfate (30% solution)
(B) The purified, slightly transparent supernatant from (A) is transferred to a transparent vessel and is stirred and mixed with the chemicals listed below. After settlement for a few minutes or less, a coagulated sediment is formed and the resultant supernatant is clear and purified. The resultant, purified supernatant is transferred to another vessel and is stirred and mixed with a suitable combination of calcium or calcium containing material, bleaching powder, iron chloride, iron sulfate, aluminium sulfate, aluminium polychloride, polymer flocculant, sand, clay, mud, disinfectant, soda, washing soda, soap, cleanser and the like. Repetition of the process 3 to 5 times or more, reduces the BOD and COD values of the resultant supernatant to 3-1 or less.
   (a) ferric chloride (30% solution)
   (b) calcium or lime (fine powder)
   (d) aluminium polychloride (30% solution)

### Example (Purification of Pig Waste)

(A) 0.2 liter of pig waste is purified by stirring and mixing it with the chemicals listed below. The resultant liquid is then kept still. A rapid coagulation of sludge occurs to form a sediment having a height of one-tenth of the total depth, leaving thereabove a substantially transparent water layer having a height of nine-tenths of the total depth.
   (f) aluminium sulfate 1 ppm
   (e) bleaching powder 1 gr.
   (k) clay or mud 1-2 gr.
   (a) ferric chloride (30% conc.) 3 drops
   (b) calcium 0.5 gr.
      or lime 0.25 gr.
   (f) alum (30% conc.) 3 drops
   (Addition of ammonia may cause deodorizing effect.)

### Example (Purification of Pig Waste)

(A) 0.2 liter of pig waste is purified first by removing solid materials contained therein by filtration means. The resultant filtrate is stirred and mixed with the chemicals listed below and is then kept still. A rapid coagulation of sludge occurs to form sediment having a height of one-tenth the total depth of liquid, leaving thereabove a substantially transparent supernatant layer having a height of nine-tenths the total depth.
   (a) ferric chloride (50% conc.) 3 drops
   (b) calcium or calcium containing 0.3 gr.
      material or lime
   (c) alum 0.3 gr.
   (g) ammonia 2 drops
(B) The supernatant from (A) is transferred to a transparent glass vessel and is stirred and mixed with substances the same as the above (a), (b) and (c) or the chemicals listed below. A rapid coagulation occurs, leaving a transparent supernatant layer.
   (a) ferric chloride (50% conc.) 3 drops
   (b) lime (fine powder) 0.3 gr.
   (d) aluminium polychloride (30% conc.) 3 drops
(C) The transparent supernatant from (B) is transferred to a transparent vessel and stirred and mixed with the chemicals listed below and is then kept still. A rapid coagulation occurs and 97% of impurities remaining in the supernatant settle, thus making the resultant supernatant clearer. The resulting supernatant is transferred to another vessel and is mixed with calcium or calcium containing material and an appropriate combination of ferric chloride, iron sulfate, aluminium polychloride, aluminium sulfate, alum and polymer flocculant, while maintaining pH value of the liquid within a range from 11 to 5, preferably approximately at 7. Such a purification procedure is repeated 3-5 times or more. It takes only one hour or less to reduce BOD or COD of the liquid to 3-1.
   (a) ferric chloride (30% conc.) 2 drops
   (e) bleaching powder (fine powder) 0.25 gr.
   (d) aluminium polychloride (30% conc.) 3 drops

### Example (Purification of Sewage from Kitchen)

(A) 0.2 liter of drainage from a kitchen of a hotel containing lard (pig fats) and vet (cow fats) is stirred and mixed with the chemicals listed below. The drainage which is clouded with black material and which contains plenty of sludge is purified, resulting in coagulated sediment of such sludge having a height of one quarter of the total depth of the liquid and a grayish supernatant layer having a height of three-quarters of the total depth.
   (h) sodium hydroxide (50% conc.) 0.5 cc
   (i) detergent 0.3 cc
   (a) ferric chloride (50% conc.) 5 drops
   (b) calcium containing material or lime 0.5 gr.
   (c) alum 0.3 gr.
(B) The grayish supernatant from (A) is transferred to a transparent glass vessel and is stirred and mixed with the chemicals listed below. The remaining sludge is coagulated to form a sediment having a height of one-quarter of the total depth of the liquid, resulting in a clear supernatant layer above the sediment having a height of three-quarters of the total depth.
   (h) sodium hydroxide (30% conc.) 0.3 cc
   (i) detergent 0.2 cc
   (a) ferric chloride (30% conc.) 3 drops
   (b) lime 0.25 gr.
   (d) aluminium polychloride (30% conc.) 3 drops
(C) The clear supernatant from (B) is transferred to a transparent vessel and is stirred and mixed with the chemicals listed below. The remaining sludge and flocculant form a small amount of settlement at the bottom of the vessel in three minutes or less, making substantially the whole portion in the vessel transparent. The resultant supernatant is transferred to another vessel and is mixed with the purification agents in (C), or calcium or calcium containing material suitably combined with ferric chloride, iron sulfate, aluminium sulfate, aluminium polychloride, polymer flocculant, alum, chlorides, sulfates, bleaching powder, ammonia, charcoal, acidic agents, basic agents, sodium silicate, and any suitable flocculants, while maintaining pH value of such liquid within a range from 11 to 5, preferably approximately at 7. Such purification process is repeated 3-5 times or more. In the late stage, disinfectant is used so as to sterilize the liquid. As a result, the sewage which was extremely contaminated can be inexpensively purified in an hour or less to give a water comparable to pure water. Such water is transparent, odorless, sterile and contains no impurities, both BOD and COD values being 3-1 or less.

The water purified substantially to pure water by the above repeated process can be passed through an osmotic membrane or ion exchange membrane so as to inexpensively obtain pure water or super-pure water with a higher production rate.
(a) ferric chloride (30% conc.) 1 drop
(b) bleaching powder (fine powder) 0.12 gr.
(d) aluminium polychloride (30% conc.) 2 drops

Exhaust gases can be purified by introduction into the contaminated water during purification or by introduction into purified water which is then subjected to the purification process of the present invention.

The sewage having been utilized in purification of such exhaust gas and having been purified by means of flocculants can be repeatedly used, since CO₂ contained in the exhaust gas is dissolved and decomposed in water by the amount equivolumetric to water.

On the other hand, and when NO₍₁₋₅₎, SO₍₁₋₃₎ and CO₍₁₋₃₎ still remain in the exhaust gas, such gas can be treated by directly introducing it into water or aqueous solution containing a quantity of flocculant, or by injecting it into water or aqueous solution containing a quantity of flocculant as micro-bubbles. The resultant water or aqueous solution is then introduced into a vessel and is circulated therein so as to be contacted with and dissolved in contaminated water. Thus a clean gas is obtained and is discharged in to ambient air. Sulfuric acid and nitric acid generated during purification of SO₍₁₋₃₎ and NO₍₁₋₅₎ are continuously decomposed and purified by means of flocculant, whereby purified water can continuously be utilized.

An example of the device for conducting the method of the invention will be briefly explained below with reference to Fig. 1. This device is intended to purify either one or both of sewage and exhaust gas.

A hopper 1 is divided into an adequate number of compartments into which single or mixed flocculants consisting of various chemicals are put. A switch on a control panel 3 is turned on to start a pump 4 which sends contaminated water from a purification tank 5 to a mixer 7 via a suction pipe 6 with some pressure.

Liquid to be purified is sent forward by rotating a screw 9 connected to a motor 8, and the volume of the liquid going through the mixer 7 is calculated by a flow meter 10 installed in the mixer 7. A certain amount of each flocculant neccesary for a ton of liquid to be purified is fed into the mixer 7 via a supply pipe according to the instruction from the control panel 3.

When the liquid to be purified and the flocculant are mixed, the mixture flows down with pressure via an induction pipe 12 and is injected into the purification tank 5 with a high pressure by the tip of a nozzle 13 installed within the tank 5. Sewage water around the nozzle 13 in the tank 5 is forced into a pipe 14 through a wide opening 15 of the pipe with a rate twice that of the exit of the sewage water from the nozzle 13. At this time, sewage passes through around an exhaust gas ejector 16 located in the pipe under high-speed and high-pressure.

On the other hand, the exhaust gas is sucked at a high speed from the ejector 16 and is mixed with liquid to be purified and becomes a number of bubbles with ultra fine particles, which is ejected from the pipe 14 and rotates within the purification tank 5, wherein it contacts and is mixed with the liquid to be purified. CO₍₁₋₃₎, SO₍₁₋₃₎ and NO₍₁₋₅₎ included in the bubbles are absorbed and dissolved in the liquid to be purified successively. SO₍₁₋₃₎ dissolves and changes to dilute sulfuric acid, and NO₍₁₋₅₎ dissolves and changes to dilute nitric acid.

These acids are progressively neutralized, dissolved, and purified by the mixture of various purifying chemicals. Simultaneously, by being carried up by the liquid to be purified, the gas collides with the punching metals 17 installed in an adequate number in the purification tank 5 and collides with other matters, whereby it rotates and dissolves to be repeatedly purified by the liquid. Finally, the gas is released in the atmosphere from the exhaust pipe 18 without any contaminants contained in it.

The various neutralized acids deposited on the bottom of the purification tank 5 are taken out by opening the valves 19 and 20 of the drain.

When both exhaust gas and contaminated water or latter alone are to be purified, the contaminated water is fed from the pipe 21 into the tank 5 in which said purification process takes place, thereafter the supernatant liquid is sent to the next process of the purification apparatus from the pipe 22. Floating matters generated in the purification process are removed by sucking from the sucking pipe 23 above the tank, while the deposits are removed from the bottom of the purification tank 5.

### Possible Applications in the Industry

This invention can be applied to purify not only contaminated water and exhaust gas, but also water from swimming pools, baths, hot springs and various types of entertainment facilities, or air from factories, theatres, gathering places, exhibition places and the like.

In addition to these applications, a partial list of embodiments is as follows.
(1) a purification method and apparatus that produces harmless water and air by purifying and reusing, at a low cost, contaminated water on the earth and in space, or purifies large amounts of water which have been used and disposed of for the purpose of preventing environmental contamination.
(2) Purification of domestic waste water, miscellaneous sewage, industrial waste liquid, factory waste liquid, and cooling water from nuclear power plants, thermoelectric power plants, boilers, air-conditioners and so on.
(3) Various kinds of waste liquid, garbage liquid waste, incinerator liquid waste, dyes, detergent, kitchen water, slaughterhouse wastes, meat and fish processing wastes.
(4) Purification of algae bloom, red tides, seaweeds and muddy water.
(5) Sterilization from domestic animals, animal wastes, bacteria, colon bacilli, cholera germs, and Salmonella.
(6) Production of phosphorus, nitrogen, carbon dioxide, cyanogen, drugs, heavy metals, agricultural chemicals and sterilizing chemicals.
(7) Purification of rivers, lakes, and swamps, ponds, seas and sludge.
(8) Purification of drinking water, semi-drinking water and sewage.
(9) Purification of highly-contaminated water at construction sites (dams, tunnels, rivers, reclamation, building, bridges, dredging, marine developments, tunnel constructions, and deep underground constructions).
(10) Prevention of environmental contamination and securing of emergency drinking water in case of draughts or disasters.
(11) Production and re-utilization of super pure water that can be used after the process of purification by the last membrane only to clean IC and electronics parts.
(12) Purification, desalination and conversion of cooling and heating water for nuclear power plants, thermoelectric power plants, boilers, combustion engines and heat engines, hot water, or seawater pumped up in a large amount or for cooling, into drinking water, semi-drinking water or industrial water.
(13) Afforestation of deserts by purifying and desalinating seawater which is sent to large lakes made in the desert and canals connected to it.

## Claims

1. A method for purifying sewage by treatment with flocculants, comprising mixing the flocculants with the sewage and separating purified water from contaminants, characterized in that the flocculants are a calcium containing compound and one or more substances selected from the group consisting of aluminium polychloride, ferric chloride, aluminium sulfate, alum, sodium hydroxide, detergent, polymeric flocculant, sodium bicarbonate, iron sulfate, ammonium sulfate, sodium aluminate, zinc chloride, aluminium chloride, potassium, aluminium sulphate, magnesium sulfate, magnesium chloride, sodium hypochlorite, sulfuric acid, nitric acid, hydrochloric acid, phosphoric acid, boric acid, chlorine dioxide, ammonia, chlorine, ozone, oxygen, sulfur, sodium carbonate, sodium silicate, surface active agent and cleanser,
wherein the treatment is repeated more than once
wherein the flocculants are introduced from a hopper to a mixer and mixed in the mixer with one portion of sewage supplied from a purification tank, the resulting mixture is injected from a nozzle of an induction pipe through an ejector into the tank to flocculate and settle the contaminants from the sewage and to separate a purified supernatant therefrom, sewage around the nozzle in the tank is forced into the ejector, an exhaust gas is sucked through the ejector into the tank to form a number of bubbles with ultra fine particles, the flocculated and settled contaminants are taken out by a drain at the bottom of the tank, a purified supernatant is removed from the upper portion of the tank and purified air is exhausted from the top of the tank.

2. A method for purifying sewage by treatment with flocculants according to claim 1, wherein the exhausted gas is a gas containing CO₁₋₃ and NO₁₋₅ and/or SO₁₋₃.

3. A sewage purification method according to Claim 1 or 2, wherein the calcium containing material is a calcium containing compound from the group comprising lime, calcium carbonate, bleaching powder, and calcium hydroxide.

4. A sewage purification method according to Claim 1 or 2, comprising adding iron sulfate, ammonia and/or hydrochloric acid.

5. A sewage purification method according to Claim 1 or 2, wherein the sewage is contaminated river water, lake water, swamp water or bay seawater; domestic sewage; industrial waste fluid, butcher waste fluid, sewage, dust waste fluid, garbage incinerator waste fluid, dung fluid, agricultural chemical containing waste fluid, germicide containing waste fluid or kitchen sewage.

## Patentansprüche

1. Verfahren zum Reinigen von Abwasser durch Behandeln mit Flockungsmitteln, umfassend das Mischen der Flockungsmittel mit dem Abwasser und das Separieren gereinigten Wassers von Verunreinigungen, **dadurch gekennzeichnet,** daß die Flockungsmittel eine calciumhaltige Verbindung und eine oder mehrere Substanzen sind, ausgewählt aus der Gruppe Aluminiumpolychlorid, Ferrichlorid, Aluminiumsulfat, Alaun, Natriumhydroxid, Reinigungsmittel, Polymer-Flockungsmittel, Natriumbicarbonat, Eisensulfat, Ammoniumsulfat, Natriumaluminat, Zinkchlorid, Aluminiumchlorid, Kalium, Aluminiumsulfat, Magnesiumsulfat, Magnesiumchlorid, Natriumhypochlorit, Schwefelsäure, Salpetersäure, Salzsäure, Phosphorsäure, Borsäure, Chlordioxid, Ammoniak, Chlor, Ozon, Sauerstoff, Schwefel, Natriumcarbonat, Natriumsilicat, oberflächenaktive Mittel und Reinigungsmasse,
wobei die Behandlung mehr als einmal wiederholt wird,
wobei die Flockungsmittel von einem Trichter in einen Mischer eingeleitet und in dem Mischer gemischt werden, wobei ein Teil des Abwassers von einem Reinigungstank zugespeist wird, das erhaltene Gemisch aus einer Düse eines Einführrohrs über einen Ausstoßer in den Tank injiziert wird, um auszufällen und die Verunreinigungen aus dem Abwasser abzusetzen und daraus einen gereinigten Überstand zu separieren, wobei das Abwasser rund um die Düse in dem Tank zwangsweise in den Ausstoßer geleitet wird, über den Ausstoßer ein Abgas in den Tank gesaugt wird, um eine Anzahl von Bläschen mit ultrafeinen Partikeln zu bilden, die geflockten und abgesetzten Verunreinigungen über einen Ablauf am Boden des Tanks abgenommen werden, ein gereinigter Überstand aus dem oberen Bereich des Tanks entnommen und gereinigte Luft aus dem oberen Teil des Tanks abgeleitet wird.

2. Verfahren zum Reinigen von Abwasser durch Behandeln mit Flockungsmitteln nach Anspruch 1, bei dem das abgeleitete Gas ein Gas ist, welches CO₁₋₃ und NO₁₋₅ und/oder SO₁₋₃ enthält.

3. Abwasserreinigungsverfahren nach Anspruch 1 oder 2, bei dem das calciumhaltige Material eine calciumhaltige Verbindung aus der Gruppe Kalk, Calciumcarbonat, Bleichpulver und Calciumhydroxid ist.

4. Abwasserreinigungsverfahren nach Anspruch 1 oder 2, umfassend die Zugabe von Eisensulfat, Ammoniak und/oder Salzsäure.

5. Abwasserreinigungsverfahren nach Anspruch 1 oder 2, bei dem das Abwasser verunreinigtes Flußwasser, Seewasser, Sumpfwasser oder Hafen-Seewasser; Haushaltsabwasser; Industrieabfallfluid, Metzgereiabfallfluid, Abwasser, Schmutzabfallfluid, Müllaschen-Abfallfluid, Düngerfluid, landwirtschaftliche Chemikalien enthaltendes Abfallfluid, keimtötende Mittel enthaltendes Abfallfluid oder Küchenabwasser ist.

## Revendications

1. Méthode de purification d'un effluent par traitement par des floculants, comprenant le mélangeage des floculants avec l'effluent et la séparation de l'eau purifiée des contaminants, caractérisée en ce que les floculants sont constitués d'un composé contenant du calcium et d'au moins une substance choisie parmi le groupe de composés consistant en le polychlorure d'aluminium, le chlorure ferrique, le sulfate d'aluminium, l'alun, l'hydroxyde de sodium, les détergents, les floculants polymères, le bicarbonate de sodium, le sulfate de fer, le sulfate d'ammonium, l'aluminate de sodium, le chlorure de zinc, le chlorure d'aluminium, le sulfate double d'aluminium et de potassium, le sulfate de magnésium, le chlorure de magnésium, l'hypochlorite de sodium, l'acide sulfurique, l'acide nitrique, l'acide chlorhydrique, l'acide phosphorique, l'acide borique, le dioxyde de chlore, l'ammoniaque, le chlore, l'ozone, l'oxygène, le soufre, le carbonate de sodium, le silicate de sodium, les agents d'activation de surface et les agents épurants,
caractérisée en ce que le traitement est répété plus d'une fois
caractérisée en ce que les floculants sont introduits à partir d'une trémie dans un mélangeur et mélangés dans le mélangeur avec une partie de l'effluent provenant d'une cuve de purification et le mélange résultant injecté dans ladite cuve à partir de la buse d'un tuyau d'alimentation en passant à travers un injecteur, de façon à séparer par floculation les contaminants contenus dans l'effluent, à laisser déposer et à récupérer le surnageant purifié, l'effluent de la cuve situé au voisinage de la buse étant entraîné dans l'injecteur, un gaz d'échappement étant aspiré dans l'injecteur de façon à former des nombreuses bulles avec des particules ultrafines, les contaminants ayant floculé et déposé étant drainés vers l'extérieur à l'aide d'une évacuation située en bas de la cuve, le surnageant purifié étant retiré de la partie supérieure de la cuve et l'air purifié s'échappant par le haut de la cuve.

2. Méthode de purification d'effluents par traitement par des floculants selon la revendication 1, caractérisée en ce que le gaz d'échappement est un gaz contenant CO₁₋₃ et NO₁₋₅ et/ou SO₁₋₃.

3. Méthode de purification d'effluents selon la revendication 1 ou 2, caractérisée en ce que le matériau contenant du calcium est un composé contenant du calcium choisi dans le groupe comprenant la chaux, le carbonate de calcium, le chlorure de chaux, et l'hydroxyde de calcium.

4. Méthode de purification d'effluents selon la revendication 1 ou 2, comprenant l'addition de sulfate de fer, d'ammoniaque et/ou d'acide chlorhydrique.

5. Méthode de purification d'effluents selon la revendication 1 ou 2, caractérisée en ce que l'effluent est de l'eau contaminée de rivière, d'un lac, d'un marais ou de l'eau de mer contaminée d'une baie ; des effluents domestiques, un fluide résiduaire industriel, un fluide résiduaire de boucherie, des eaux d'égouts, un fluide résiduaire contaminé par des poussières, un fluide résiduaire d'incinérateur de détritus, un fluide à base de fumier, un fluide résiduaire contenant des produits chimiques agricoles, un fluide résiduaire contentant un germicide, ou un effluent de cuisine.
